Europäisches Patentamt

(19) European Patent Office

Office européen des brevets

(11) Numéro de publication : **0 055 636**
**B1**

(12)

# FASCICULE DE BREVET EUROPÉEN

(45) Date de publication du fascicule du brevet :
25.07.84

(51) Int. Cl.³ : **G 01 S 13/44**, G 01 S 7/40

(21) Numéro de dépôt : **81401715.8**

(22) Date de dépôt : **27.10.81**

(54) Récepteur d'écartométrie pour radar secondaire.

(30) Priorité : **15.12.80 FR 8026542**

(43) Date de publication de la demande :
**07.07.82 Bulletin 82/27**

(45) Mention de la délivrance du brevet :
**25.07.84 Bulletin 84/30**

(84) Etats contractants désignés :
**CH DE GB LI**

(56) Documents cités :
**WO-A-80 /023 26**
**US-A- 3 794 998**
**US-A- 3 952 304**

(73) Titulaire : **LMT RADIO PROFESSIONNELLE**
**46-47, Quai Alphonse Le Gallo**
**F-92103 Boulogne-Billancourt (FR)**

(72) Inventeur : **Goustard, Pierre**
**THOMSON-CSF SCPI 173, bld Haussmann**
**F-75360 Paris Cedex 08 (FR)**

(74) Mandataire : **Desperrier, Jean-Louis et al**
**THOMSON-CSF SCPI 173, Bld Haussmann**
**F-75379 Paris Cedex 08 (FR)**

Jouve, 18, rue St-Denis, 75001 Paris, France

## Description

La présente invention a pour objet un récepteur d'écartométrie pour radar secondaire, et plus particulièrement, un système permettant de minimiser les sources d'erreur provenant des récepteurs équipant les stations-sol ou les systèmes embarqués de poursuite ou de veille. Ce type de récepteur est utilisé lors de poursuite angulaire ou de veille. On veut plus particulièrement minimiser les sources d'erreurs des récepteurs utilisés lors de mesure en écartométrie azimutale.

Les récepteurs actuels utilisés lors de mesures en écartométrie azimutale sont du type récepteurs doubles, et engendrent de nombreuses erreurs lors de ces mesures. Ils sont constitués par deux chaînes d'éléments en parallèle possédant un oscillateur local commun. Deux câbles d'antenne alimentent chacun l'une des chaînes. Les impulsions reçues en entrées dans chaque chaîne sont à une fréquence F. Chaque chaîne comprend d'abord un présélecteur alimenté par un câble d'antenne réceptrice. Le présélecteur est suivi d'un préamplificateur UHF qui attaque un mélangeur. Le mélangeur reçoit une onde à fréquence F0 issue de l'oscillateur local. La sortie du mélangeur délivre une onde à fréquence intermédiaire F1. Cette sortie est préamplifiée par un préamplificateur placé après le mélangeur, puis filtrée par un filtre placé après le préamplificateur. A la suite de ce filtre est placé un amplificateur logarithmique qui permet de transformer le signal filtré suivant une loi logarithmique, de sorte que si $V_e$ est le signal à l'entrée de cet amplificateur, alors $V_s = a \ Log \ (b \cdot Ve)$ à la sortie de l'amplificateur. Les signaux de sortie des amplificateurs logarithmiques sont appliqués à un amplificateur opérationnel qui effectue analogiquement la différence des signaux d'entrée. Si S1 et S2 sont les signaux d'entrée de l'amplificateur opérationnel, la sortie sera |S1-S2|.

Dans la technique de mesure en écartométrie azimutale les signaux injectés à l'entrée de chaque chaîne sont l'un la somme S l'autre la différence D de deux signaux. Ces signaux sont issus de l'antenne qui capte le signal émis par un répondeur. Les signaux détectés « S » et « D » à l'une des sorties de chaque amplificateur logarithmique sont chacun appliqués sur une entrée d'un amplificateur opérationnel qui délivre une tension de sortie égale à la tension d'écartométrie.

$$Ek \cdot log \ (S/D) = « S/D »$$

Le problème posé est la suppression des erreurs systématiques issues de chaque chaîne du récepteur. En effet pour que les mesures aient un sens il faut que chaque élément constituant la première chaîne soit strictement identique à son homologue de la deuxième chaîne. C'est-à-dire d'une part qu'ils aient des gains égaux et qu'ils ne déphasent pas les signaux l'un par rapport à l'autre, d'autre part que leurs performances soient identiques. Or bien souvent de nombreuses différences entre leurs caractéristiques engendrent des erreurs.

La première erreur rencontrée sur l'amplitude du signal est fonction de la fréquence porteuse des impulsions reçues. Cette fréquence se situe dans la bande de ± 3 MHz autour de la fréquence porteuse. L'ondulation du filtre dans cette bande sur chaque voie étant de X dB, l'erreur à la sortie sur « S/D » venant des deux voies sera donc ± 2X dB = ± X1 dB.

La deuxième erreur commise sur l'amplitude est fonction de la puissance du signal à l'entrée du récepteur. Cette puissance se situe entre − 85 dBm et − 25 dBm. L'ondulation sur chaque voie S et D de la courbe de réponse en courant détecté des amplificateurs logarithmiques étant de X' dB, l'erreur en sortie des amplificateurs opérationnels est de ± 2X' dB = ± X2 dB.

La troisième erreur commise sur l'amplitude est fonction du rapport signal à bruit du récepteur. Proche de la sensibilité tangentielle c'est-à-dire pour un rapport signal à bruit d'environ 6 dB théoriques, le bruit donné par la courbe de Gauss pour un écart type égal à 3 fluctue entre ± X3 dB.

La quatrième erreur commise sur l'amplitude est fonction de la température ambiante.

Classiquement pour minimiser ces erreurs systématiques on utilise des appareils très performants pour chaque voie, l'erreur X1 est diminuée en calculant des filtres avec un minimum d'ondulation dans la bande utilisée, l'erreur X2 est diminuée en choisissant des amplificateurs logarithmiques très performants ou/et en ajustant les courants détectés à chaque étage de la chaîne par des atténuateurs. L'erreur X3 est diminuée en améliorant au maximum le facteur de bruit des récepteurs, ou bien en filtrant analogiquement l'impulsion détectée, par un filtrage sélectif. Toutes ces caractéristiques exigent une très grande performance du récepteur d'écartométrie utilisé et par conséquent, son prix est d'autant plus élevé. Un dispositif utilisant des impulsions de référence engendrées dans le récepteur lui-même a été décrit dans le document US-A-3 794 998. Ce dispositif ne permet toutefois de minimiser de manière satisfaisante que l'erreur du 2e type précité mais ne permet cependant pas de minimiser l'ensemble de ces erreurs.

L'invention propose de minimiser les erreurs systématiques du récepteur fonction de la fréquence porteuse des impulsions reçues, fonction de la puissance du signal à l'entrée du récepteur, et fonction de la température ambiante, en utilisant un récepteur double classique, donc pas très coûteux, auquel on a rajouté des moyens de correction d'erreur, l'ensemble récepteur double classique et moyens de correction d'erreur constituant un récepteur d'écartométrie plus performant.

Selon l'invention le récepteur d'écartométrie comporte : deux voies d'entrée (S, D) recevant les signaux impulsionnels issus d'une antenne réceptrice, l'une de ces voies recevant un signal somme (S), l'autre recevant un signal différence (D). Il comporte deux chaînes de réception, comportant des éléments, en parallèle et un oscillateur local commun, chaque chaîne de réception comprend un présélecteur alimenté par une voie d'entrée, elle-même alimentée par un câble d'antenne recevant une onde à une fréquence F, le présélecteur étant suivi d'un préamplificateur injectant l'onde filtrée et préamplifiée à un mélangeur, ce mélangeur recevant une deuxième onde à une autre fréquence déterminée F0, celle-ci venant de l'oscillateur local, le mélangeur délivrant une onde à une fréquence égale à la différence de la première et de la deuxième onde, le mélangeur étant suivi d'un préamplificateur puis d'un filtre puis d'un amplificateur logarithmique délivrant un premier et un deuxième signal ; comportant également des moyens de correction d'erreurs systématiques ces moyens étant mis au point à partir d'une table de correction d'erreur comportant des mesures donnant la position réelle de la cible, et la position donnée par la lecture de la tension d'écartométrie délivrée par le récepteur, ces mesures d'étalonnage ayant été effectuées lors d'un banc d'essai, ces moyens de correction d'erreur étant connectés aux sorties des deux chaînes de réception.

D'autres caractéristiques de l'invention ressortiront de la description détaillée ci-dessous. Bien entendu, la description et le schéma ne sont donnés qu'à titre indicatif et nullement limitatif de l'invention.

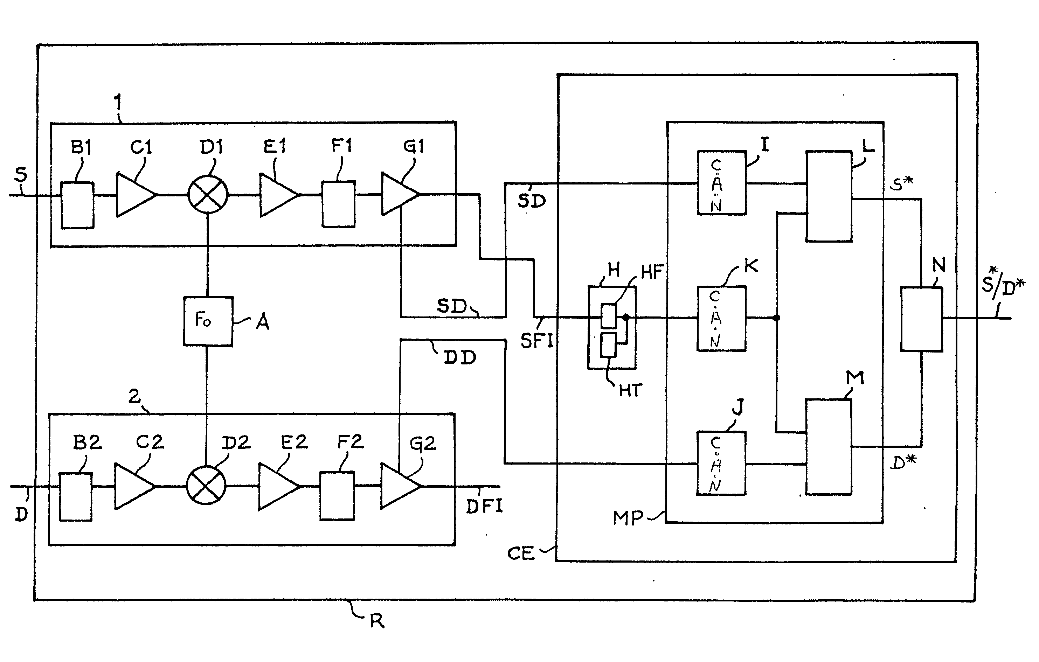

La figure unique représente le schéma de principe du récepteur d'écartométrie selon l'invention.

Le récepteur d'écartométrie R selon l'invention, dont le schéma de principe est représenté sur la figure unique, possède deux voies d'entrées. L'une de ces voies reçoit un signal impulsionnel S ; ce signal est la somme de deux signaux issus de l'antenne réceptrice qui capte le signal impulsionnel émis par un répondeur à bord d'une cible. L'autre voie reçoit un signal impulsionnel D ; ce signal étant la différence des signaux précédents issus de l'antenne.

L'antenne réceptrice double est connectée au récepteur d'écartométrie à l'aide de deux câbles. Chaque câble est connecté à l'une des voies d'entrée.

Le récepteur R comporte deux chaînes réceptrices 1, 2, dont l'une a pour entrée la voie S et l'autre a pour entrée la voie D. Il comporte également des moyens de correction d'erreur CE connectés aux sorties des chaînes de réception.

Chaque chaîne réceptrice 1, 2 comprend un présélecteur B1 relatif à la chaîne 1, un présélecteur B2 relatif à la chaîne 2. La bande passante est de 40 MHz autour de 1 090 MHz. L'un reçoit le signal somme S et l'autre le signal différence D.

Chaque présélecteur B1, B2 est suivi d'un préamplificateur « UHF » C1 relatif à la chaîne 1, d'un préamplificateur C2 relatif à la chaîne 2 ayant une large bande passante.

Chaque préamplificateur C1, C2 attaque un mélangeur D1, D2. Un oscillateur local A commun aux deux chaînes réceptrices 1, 2 est connecté d'une part au mélangeur D1 de la première chaîne 1, d'autre part au mélangeur D2 de la deuxième chaîne 2. La sortie de chaque mélangeur D1, D2 est connectée à un préamplificateur E1, E2 suivi d'un filtre F1, F2 dont la bande passante est sensiblement égale à 8 MHz autour de 60 MHz. Ce filtre F1, F2 est connecté à un amplificateur logarithmique G1, G2.

Les signaux reçus aux entrées du récepteur R sont portés par une onde de fréquence 1 090 MHz. Cette onde de 1 090 MHz $\pm$ 3 MHz est filtrée par le présélecteur B1, B2 autour de 1 090 MHz. Le présélecteur B1, B2 envoie cette onde filtrée au préamplificateur « UHF » C1, C2 qui l'amplifie avant de l'envoyer au mélangeur D1, D2.

Le mélangeur D1, D2 reçoit en plus de cette onde amplifiée de fréquence 1 090 MHz une autre onde issue de l'oscillateur local A à une fréquence F0. Le mélangeur D1, D2 délivre le signal à une fréquence intermédiaire Fi de 60 MHz. Ce signal à 60 MHz est préamplifié par le préamplificateur E1, E2, puis filtré par le filtre F1, F2 à 60 MHz. Ce signal est ensuite amplifié par l'amplificateur logarithmique G1, G2, de signal est ensuite amplifié par l'amplificateur logarithmique G1, G2 de sorte que l'on a à une première sortie de la première chaîne 1 un signal SFI de fréquence Fi = 60 MHz tel que SFI = k · log S ; et que l'on a à une première sortie de la deuxième chaîne 2 un signal DFI de fréquence Fi = 60 MHz tel que DFI = K log D.

Ces signaux SFI et DFI sont traités par les amplificateurs G1, G2 pour avoir les signaux détectés SD et DD qui représentent l'enveloppe des signaux SFI et DFI. Le signal détecté SD est pris sur une deuxième sortie de la première chaîne et le signal détecté DD est pris sur une deuxième sortie de la deuxième chaîne. A la sortie des chaînes 1 et 2, constituée par l'ensemble des éléments qui ont été cités, on connecte les moyens de correction d'erreur CE. Les deux chaînes de réception présentent donc deux sorties chacune. La sortie délivrant le signal SFI avec porteuse et la sortie délivrant le signal détecté SD concernent la première chaîne.

La sortie délivrant le signal DFI avec porteuse et la sortie délivrant le signal détecté DD concernent la deuxième chaîne 2. Le signal DFI n'est pas utilisé pour les moyens de correction CE dans cette réalisation.

On connecte les moyens de correction d'erreur CE aux deux sorties de la première chaîne de réception 1 et à la sortie détectée de la deuxième chaîne de réception 2.

Ces moyens comportent des moyens de mesure H constitués par un discriminateur à coïncidence HF connecté à la première sortie de l'amplificateur logarithmique G1 de la première chaîne, et une sonde de température HT. Ils comportent des moyens de mémorisation d'erreurs MP constitués par trois convertisseurs analogiques-numériques I, J, K et deux mémoires programmables L, M. Ils comportent également des moyens de génération N constitués par un additionneur numérique. L'entrée du premier convertisseur I est connectée à la deuxième sortie de l'amplificateur logarithmique G1 de la première chaîne, l'entrée du deuxième convertisseur J est connectée à la deuxième sortie de l'amplificateur logarithmique G2 de la deuxième chaîne et l'entrée du troisième convertisseur K est connectée à la sortie du discriminateur à coïncidence et à la sortie de la sonde de température HT. Les mémoires programmables L, M sont connectées aux sorties des convertisseurs I, J, K, de sorte que la première mémoire L est connectée au premier convertisseur I, la deuxième mémoire M est connectée au deuxième convertisseur J, la première et la deuxième mémoire L, M sont toutes deux connectées au troisième convertisseur K.

L'additionneur numérique N est connecté par ses entrées aux sorties des deux mémoires programmables L, M.

Les signaux SD et DD issus des premières sorties de chaque amplificateur logarithmique G1, G2 sont codés numériquement par les convertisseurs analogiques digitaux I, J, sur n « eb », éléments binaires ou bits, chacun. Le signal SFI issu de la première sortie de l'amplificateur G1 de la première chaîne est injecté à l'entrée du discriminateur à coïncidence HF. Le signal délivré par ce dernier est codé numériquement sur m « eb » par un convertisseur analogique K. Chaque voie SD et DD codée sur n « eb » par un convertisseur analogique K. Chaque voie SD et DD codée sur n « eb » est associée aux m « eb » de la mesure de fréquence.

Les $(m + n)$ premiers « eb » ainsi constitués représentent l'adresse d'une case-mémoire d'une première mémoire L.

Les $(m + n)$ deuxièmes « eb » ainsi constitués représentent l'adresse d'une case-mémoire d'une deuxième mémoire M.

Les sorties de la première mémoire L codées sur p « eb » et les sorties de la deuxième mémoire M codées également sur p « eb » sont additionnées par l'additionneur numérique N pour fournir la tension d'écartométrie $Ve = k \, Log \, S/D$.

Les mémoires L, M sont programmées de façon à sortir un signal numérique corrigé S*, D* suivant une table de correction d'erreur. Cette table est établie à partir de mesures d'étalonnage effectuées point par point pour différentes positions que peut avoir la cible lors de la poursuite angulaire. En effet, connaissant sa position exacte, on connaît l'erreur que l'on commet sur la tension d'écartométrie du récepteur, puisque cette tension qui est représentée sur un diagramme, indique la position angulaire de la cible. Il suffit donc de connaître ces erreurs systématiques dues aux différences entre les caractéristiques des éléments constituant chaque chaîne pour établir la table.

La programmation est donc faite à partir de la table de correction de la façon suivante. Si X est la valeur du signal à la sortie des convertisseurs, X est aussi l'adresse en mémoire de $X \pm e$, où $X \pm e$ est la valeur exacte du signal correspondant à la position actuelle de la cible, c'est-à-dire du signal corrigé. La programmation des mémoires peut également se faire par un banc automatique de remplissage des mémoires.

Un deuxième type de réalisation peut ne faire intervenir qu'une seule mémoire programmable à la place des deux mémoires qui sont citées dans la première réalisation.

Cette mémoire est adressée dans ce cas par la mise en série des n « eb » venant du premier convertisseur I, des n « eb » venant du deuxième convertisseur J et des m « eb » venant du troisième convertisseur K.

Les sorties de la mémoire sont codées sur p « eb » et représentent directement la tension d'écartométrie corrigée.

Les erreurs systématiques corrigées sont celles qui sont fonction de la fréquence porteuse des impulsions reçues, celles qui sont fonction de la puissance du signal à l'entrée du récepteur, et celles qui sont fonction de la température ambiante. Prenons par exemple, la correction des deux premières erreurs.

Actuellement l'erreur X1 fonction de la fréquence est de l'ordre de $\pm 1$ dB sur la mesure de la tension d'écartométrie à la sortie des amplificateurs logarithmiques.

L'erreur X2 fonction de la puissance du signal à l'entrée du récepteur est de l'ordre de $\pm 0,5$ dB.

L'erreur cumulée en sortie pour ces deux erreurs est de l'ordre de $\pm (1 + 0,5)$ dB soit $\pm 1,5$ dB.

Pour les deux types de réalisation décrits on peut coder la fréquence sur $m = 4$ eb pour des valeurs de fréquences prises entre 1 085 MHz et 1 095 MHz ce qui correspond à un codage de l'erreur X1 au pas de $2 \cdot X1/2^4 = 0,125$ dB. Quant à la puissance d'entrée, si on numérise chaque voie sur $n = 8$ « eb » pour une dynamique d'entrée de 60 dB le codage de l'erreur est égal à $60/2^8 = 0,234$ dB.

L'erreur cumulée en sortie sera $\pm (0,125 + 0,234) = \pm 0,35$ dB.

Si l'on code la tension d'écartométrie sur 20 dB de dynamique, la sortie des mémoires étant codée sur p « eb » doit avoir une précision de $\pm 0,35$ dB. Le nombre p est alors déterminé par l'équation $20 \, dB/2^P = 0,35$ d'où p doit être supérieur ou égal à 5.

Pour le premier type de réalisation chaque mémoire doit alors avoir une capacité de $p \cdot 2^{n+m}$ soit $5 \times 4$ k « eb ». ($5 \times 4$ kbit)

Pour le deuxième type de réalisation la mémoire doit avoir une capacité de $p \cdot 2^{n+n+m}$ soit $5 \times 1$ M « eb ». ($5 \times 1$ Mbit)

Pour corriger l'erreur due à la température il faut augmenter m et donc augmenter la capacité des mémoires.

**Revendications**

1. Récepteur d'écartométrie (R) pour radar secondaire du type comportant deux voies d'entrées (S, D) recevant des signaux impulsionnels issus d'une antenne réceptrice, l'une de ces voies recevant un signal somme (S) l'autre recevant un signal différence (D) ; ce récepteur comportant deux chaînes de réception (1, 2), constituées par des éléments, en parallèle et un oscillateur local (A) commun, chaque chaîne de réception (1, 2) comprenant un présélecteur (B1, B2) alimenté par l'une des voies d'entrée recevant une onde à une première fréquence déterminée, suivi d'un préamplificateur (C1, C2) injectant l'onde filtrée et préamplifiée dans un mélangeur (D1, D2), ce mélangeur (D1, D2) recevant une deuxième onde à une deuxième fréquence déterminée, celle-ci venant de l'oscillateur local (A), le mélangeur (D1, D2) délivrant une onde à une fréquence égale à la différence des première et deuxième fréquences, l'onde étant ensuite préamplifiée par un préamplificateur (E1, E2), puis filtrée par un filtre (F1, F2), puis amplifiée par un amplificateur logarithmique (G1, G2), les deux chaînes de réception (1, 2) présentant respectivement une sortie délivrant un signal (SFI) avec porteuse et une sortie délivrant un signal détecté (SD) sur la première chaîne 1, une sortie délivrant un signal détecté (DD) sur la deuxième chaîne 2 ; récepteur d'écartométrie caractérisé en ce qu'il comporte également des moyens de correction d'erreurs systématiques (CE) comprenant une table de correction d'erreurs (L, M) chargée à partir de mesures donnant la position réelle de la cible et la position donnée par la lecture de la tension d'écartométrie délivrée par le récepteur classique ; ces mesures provenant d'un étalonnage préalable pour différentes positions de la cible, et ces moyens de correction d'erreur (CE) étant connectés aux sorties (SD, DD, SFI) des deux chaînes de réception (1, 2).

2. Récepteur d'écartométrie (R) selon la revendication 1, caractérisé en ce que les moyens de correction (CE) comportent des moyens de mesure (H) connectés à la sortie délivrant le signal (SFI) de la première chaîne de réception (1), et en ce qu'ils comportent des moyens de mémorisation d'erreurs (MP) connectés aux sorties correspondant aux signaux détectés (SD, DD), sortant du récepteur (R) et à la sortie des moyens de mesure (H) ; les moyens de correction d'erreurs (CE) comportant également des moyens de génération (N) permettant d'obtenir la tension d'écartométrie corrigée (S*/D*) connectés aux sorties des moyens de mémorisation d'erreur (MP).

3. Récepteur d'écartométrie selon la revendication 2, caractérisé en ce que les moyens de mémorisation d'erreur (MP) comportent un premier (I) et un deuxième (J) convertisseurs analogique-numérique connectés respectivement aux sorties détectées (SD, DD) du récepteur, un troisième (K) convertisseur analogique-numérique connecté aux sorties des moyens de mesure (H) de la fréquence porteuse et en ce que les moyens de mémorisation (MP) comportent également une première (L) mémoire programmable connectée au premier (I) et au troisième (K) convertisseur analogique-numérique, et une deuxième (M) mémoire programmable connectée au deuxième (J) et au troisième (K) convertisseur analogique-numérique.

4. Récepteur d'écartométrie selon l'une quelconque des revendications 1, 2 ou 3, caractérisé en ce que les moyens de génération (N) sont constitués par un additionneur numérique qui additionne les « eb » ou bits des sorties des deux mémoires programmables (L, M) pour donner la tension d'écartométrie.

5. Récepteur d'écartométrie selon l'une quelconque des revendications 1, 2, 3 ou 4, caractérisé en ce que les moyens de mesure (H) comportent un discriminateur à coïncidence (HF) connecté à la sortie délivrant le signal avec porteuse (SFI), et une sonde de température (HT), dont les sorties sont connectées au troisième (K) convertisseur analogique-numérique.

## Claims

1. Deviation measurement receiver (R) for secondary radar of the type comprising two input channels (S, D) receiving the pulse signals furnished by a reception antenna, one of said channels receiving a sum signal (S) and the other receiving a difference signal (D) ; said receiver comprises two receiver chains (1, 2) formed by elements in parallel and a common local oscillator (A), each receiver chain (1, 2) comprising a preselector (B1, B2) fed by one of the input channels receiving a wave with a first predetermined frequency, followed by a preamplifier (C1, C2) injecting the filtered and preamplified wave into a mixer (D1, D2), this mixer (D1, D2) receiving a second wave with a second predetermined frequency, the latter coming from the local oscillator (A), the mixer (D1, D2) furnishing a wave with a frequency equal to the difference between the first and second frequencies, the wave then being preamplified by a preamplifier (E1, E2), then filtered by a filter (F1, F2), then amplified by a logarithmic amplifier (G1, G2), the two receiver chains (1, 2) having respectively, on the first chain 1, an output furnishing a signal (SF1) with carrier wave and an output furnishing a demodulated signal (SD) and, on the second chain 2, an output furnishing a demodulated signal (DD) ; the deviation measurement receiver is characterized in that it also comprises systematic error correction means (CE) comprising an error correction table (L, M) loaded on the basis of measurements giving the real position of the target and the position given by the reading of the deviation measurement voltage furnished by the conventional receiver ; said measurements originate from a preceding standardization for different positions of the target and said error correction means (CE) being connected to the outputs (SD, DD, SFI) of the two receiver chains (1, 2).

2. Deviation measurement receiver (R) according to claim 1, characterized in that the correction means (CE) comprise measuring means (H) connected to the output furnishing the signal (SFI) of the first receiver chain (1), and in that they comprise error memory means (MP) connected to the outputs corresponding to the demodulated signals (SD, DD) coming from the receiver (R) and to the output of the measuring means (H) ; the error correction means (CE) also comprise generating means (N) for obtaining the corrected deviation measurement voltage (S*/D*) connected to the outputs of the error memory means (MP).

3. Deviation measurement receiver according to claim 2, characterized in that the error memory means (MP) comprise a first (I) and a second (J) analog/digital converter connected respectively to the demodulated outputs (SD, DD) of the receiver, a third analog/digital converter (K) connected to the outputs of the measuring means (H) for measuring the carrier frequency and in that the memory means (MP) also comprise a first programmable memory (L) connected to the first (I) and to the third (K) analog/digital converter, and a second programmable memory (M) connected to the second (J) and to the third (K) analog/digital converter.

4. Deviation measurement receiver according to any one of claims 1, 2 or 3, characterized in that the generating means (N) are formed by a digital adder which adds the binary elements or bits of the outputs of the two programmable memories (L, M) to give the deviation measurement voltage.

5. Deviation measurement receiver according to any one of claims 1, 2, 3 or 4, characterized in that the measuring means (H) comprise a coincidence discriminator (HF) connected to the output furnishing the signal with carrier wave (SFI) and a temperature probe (HT) of which the outputs are connected to the third analog/digital converter (K).

**Ansprüche**

1. Ablagemessungsempfänger (R) für Sekundärradar, vom Typ mit zwei Eingangskanälen (S, D), welche Impulssignale empfangen, die von einer Empfangsantenne ausgehen, wobei einer dieser Kanäle ein Summensignal (S) und der andere ein Differenzsignal (D) empfängt ; wobei dieser Empfänger zwei Empfängerschaltungszüge (1, 2) enthält, die aus parallel liegenden Elementen und einem gemeinsamen Lokaloszillator (A) gebildet sind, wobei jeder Empfängerschaltungszug (1, 2) eine Vorselektionsstufe (B1, B2) umfaßt, die von einem der Eingangskanäle gespeist wird, welcher eine Schwingung mit einer ersten bestimmten Frequenz empfängt, gefolgt von einem Vorverstärker (C1, C2), welcher die gefilterte und vorverstärkte Schwingung in einen Mischer (D1, D2) einspeist, wobei dieser Mischer (D1, D2) eine zweite Schwingung mit einer zweiten bestimmten Frequenz empfängt, welche aus dem Lokaloszillator (A) stammt, wobei ferner der Mischer (D1, D2) eine Schwingung mit einer Frequenz abgit, welche gleich der Differenz zwischen der ersten und der zweiten Frequenz ist, wobei anschließend die Schwingung durch einen Vorverstärker (E1, E2) vorverstärkt und dann durch ein Filter (F1, F2) gefiltert sowie anschließend durch einen logarithmischen Verstärker (G1, G2) verstärkt wird, die beiden Empfangskanäle (1, 2) einen Ausgang, der ein Signal (SFI) mit Trägerschwingung abgibt, und einen Ausgang an dem ersten Kanal 1, der ein demoduliertes Signal (SD) abgibt, bzw. einen Ausgang an dem zweiten Kanal 2, der ein demoduliertes Signal (DD) abgibt, aufweisen ; und wobei der Ablagemessungsempfänger dadurch gekennzeichnet ist, daß er ferner Mittel zur Korrektur von systematischen Fehlern (CE) umfaßt, die eine Fehlerkorrekturtabelle (L, M) umfassen, welche ausgehend von Messungen aufgefüllt wird, welche die reelle Position des Zieles und diejenige Position angeben, die durch das Ablesen der Ablagemessungsspannung gewonnen wird, welche von dem herkömmlichen Empfänger abgegeben wird ; wobei diese Messungen aus einer vorhergehenden wird ; wobei diese Messungen aus einer vorhergehenden Markierung für verschiedene Positionen des Zieles herrühren und diese Fehlerkorrekturmittel (CE) mit den Ausgängen (SD, DD ; SFI) der beiden Empfängerschaltungszüge (1, 2) verbunden sind.

2. Ablagemessungsempfänger (R) nach Anspruch 1, dadurch gekennzeichnet, daß die Korrekturmittel (CE) Meßmittel (H) umfassen, welche mit dem Ausgang verbunden sind, welcher das Signal (SFI) des ersten Empfängerschaltungszuges (1) abgibt, und daß sie ferner Mittel (MP) zum Speichern von Fehlern enthalten, welche mit den Ausgängen verbunden sind, die den demodulierten Signalen (SD, DD) entsprechen, die aus dem Empfänger (R) austreten, sowie mit dem Ausgang der Meßmittel (H) verbunden sind ; und wobei die Fehlerkorrekturmittel (CE) ferner Generatormittel (N) enthalten, die es ermöglichen, die korrigierte Ablagemessungsspannung (S*/D*) zu erhalten, und die mit den Ausgängen der Fehlerspeichermittel (MP) verbunden sind.

3. Ablagemessungsempfänger nach Anspruch 2, dadurch gekennzeichnet, daß die Fehlerspeichermittel (MP) einen ersten (I) und einen zweiten (J) Analog/Digital-Umsetzer, denen jeweils die demodulierten Ausgangssignale (SD, DD) des Empfängers zugeführt werden, und einen dritten Analog/Digital-Umsetzer (K) enthalten, der mit den Ausgängen der Mittel (H) zur Messung der Trägerfrequenz verbunden ist, und daß die Speichermittel (MP) ferner einen ersten programmierbaren Speicher (L), der mit dem ersten (I) sowie mit dem dritten (K) Analog/Digital-Umsetzer verbunden ist, und einen zweiten programmierbaren Speicher (M) umfassen, der mit dem zweiten (J) sowie mit dem dritten (K) Analog/Digital-Umsetzer verbunden ist.

4. Ablagemessungsempfänger nach einem der Ansprüche 1, 2 und 3, dadurch gekennzeichnet, daß die Generatormittel (N) aus einem digitalen Addierer gebildet sind, welcher die Binärelemente bzw. Bits der Ausgänge der beiden programmierbaren Speicher (L, M) addiert, um die Ablagemessungsspannung zu liefern.

5. Ablagemessungsempfänger nach einem der Ansprüche 1, 2, 3 und 4, dadurch gekennzeichnet, daß die Meßmittel (H) einen Koinzidenzdiskriminator (HF) umfassen, welcher mit dem Ausgang verbunden ist, der das Signal mit Trägerschwingung (SFI) abgibt, und eine Temperatursonde (HT) umfassen, deren Ausgänge mit dem dritten Analog/Digital-Umsetzer (K) verbunden sind.